# EUROPÄISCHE PATENTSCHRIFT

(11) **EP 2 731 785 B1**
(45) Veröffentlichungstag und Bekanntmachung des Hinweises auf die Patenterteilung: **23.03.2016**
(21) Anmeldenummer: 12743885.1
(22) Anmeldetag: 12.07.2012
(51) Int. Cl.: B29C 70/08, B29C 71/02

(54) **VERFAHREN ZUM HERSTELLEN EINES BAUTEILS AUS EINEM FASERVERBUNDWERKSTOFF SOWIE FASERVERBUNDWERKSTOFFBAUTEIL**
METHOD FOR PRODUCING A COMPONENT FROM A COMPOSITE FIBER MATERIAL AND COMPOSITE FIBER MATERIAL COMPONENT
PROCÉDÉ DE FABRICATION D'UNE PIÈCE CONSTITUÉE D'UN MATÉRIAU COMPOSITE RENFORCÉ PAR DES FIBRES AINSI QUE PIÈCE EN MATÉRIAU COMPOSITE RENFORCÉ PAR DES FIBRES

(30) Priorität: 13.07.2011 DE 102011107683; 13.07.2011 WO PCT/EP2011/003497; 23.12.2011 DE 102011122233
(43) Veröffentlichungstag der Anmeldung: 21.05.2014
(73) Patentinhaber: Technische Universität München, 80333 München (DE)
(72) Erfinder: HÄFFELIN, Daniel, 81929 München (DE); ZAREMBA, Swen, 81927 München (DE); ZACHERLE, Bernd, 89165 Regglisweiler (DE)
(74) Vertreter: FDST Patentanwälte
(86) Internationale Anmeldenummer: PCT/EP2012/002932
(87) Internationale Veröffentlichungsnummer: WO 2013/007385

(56) Entgegenhaltungen:
- EP-A1- 0 549 110
- WO-A2-2012/007160
- DE-A1- 10 309 811

## Beschreibung

Die Erfindung betrifft ein Verfahren zum Herstellen eines Bauteils aus einem Faserverbundwerkstoff, wobei ein Fasermaterial und einen Duroplasten umfassender Formling ausgehärtet wird. Die Erfindung betrifft weiter ein entsprechend hergestelltes Bauteil aus einem Faserverbundwerkstoff. Die Erfindung beschäftigt sich dabei insbesondere mit der Oberflächenveredelung eines derartigen Bauteils.

Faserverbundwerkstoffe werden durch ein arbeits- und kostenintensives Verfahren hergestellt. Der Faserverbundwerkstoff besteht aus einem Anteil Fasern und einem Anteil Matrix, wobei der Werkstoff bei der Verarbeitung entsteht. Es ist beispielsweise üblich, vor der Zusammenkunft von Matrix und Fasern, beispielsweise durch Infusion oder Injektion, einen trockenen Vorformling aus Fasern herzustellen, der der Endkontur des Bauteils nahekommt. Dieser wird auch als Preform bezeichnet. Das Herstellen einer Preform erfolgt unter anderem durch das Aufschichten ebener Faserhalbzeuge, die unter Druck und Temperatur in eine endgeometrieähnliche Form gepresst werden können. Anschließend wird die Matrix und damit das vorgefertigte Bauteil ausgehärtet.

Als Matrixmaterial können Duroplasten verwendet werden, die sich aus mehreren Komponenten zusammensetzen können. Typische Vertreter sind epoxid-, vinyl-, polyester- und phenolbasierte Harzsysteme. Diese weisen eine Härtereaktion auf, die unter Raumtemperatur oder höheren Temperaturen stattfindet.

Der vorliegend verwendete Begriff eines Formlings, der das Fasermaterial und einen Duroplasten umfasst, soll die Be- oder Verarbeitungszustände eines Faserhalbzeugs ab Zusammenkunft mit dem Duroplasten bis zur Aushärtung umfassen. Insbesondere umfasst damit der Begriff eines Formlings die Be- oder Verarbeitungszustände einer Preform oder eines Vorformlings vom Einbringen des Duroplasten bis zur endgültigen Formgebung und Aushärtung.

Faserverbundbauteile zeigen aufgrund ihres Herstellungsverfahrens eine charakteristische Oberflächenstruktur, die ihr Einsatzspektrum bislang einschränkt. Dabei zeichnet sich unter der Oberfläche aufgrund einer in Dickenrichtung vorhandenen Anisotropie die Faserstruktur ab. Zur Herstellung einer glatten Oberfläche, die beispielsweise in der Fahrzeug- oder Luftfahrtindustrie, bei Produkten des täglichen Gebrauchs etc. gefordert wird, müssen Faserverbundbauteile aufwändig und kostenintensiv nachbearbeitet werden. Beispielsweise muss die Oberfläche eines Faserverbundbauteils hierzu unter Zwischenhärten und Abschleifen mehrmals lackiert werden. Alternativ kann ein Faserverbundbauteil nachträglich foliert werden, wozu beispielsweise in einem Sprühverfahren unterschiedliche Schichten aufgetragen werden, die chemisch reagieren und dabei eine Folie bilden. Auch ist zum Auftragen von Folien ein thermisches oder mechanisches Tiefziehverfahren möglich, wobei zweidimensionale Folien erhitzt und/oder unter Reduktion der Wandstärke in die vorgesehene Geometrie gestreckt werden.

Aufgrund der enormen mit Faserverbundwerkstoffen erzielbaren Gewichtsreduktion werden besonders in der Automobilindustrie zur Veredelung der Oberfläche auch kostenintensive Maßnahmen in Kauf genommen, wie beispielsweise das Integrieren von Zwischenschichten, die Verwendung von vergleichsweise teuren Harzen mit geringem Schwund oder die Verwendung von qualitativ hochwertigen Faserhalbzeugen.

Der Kostenaufwand zur Oberflächenveredelung von Faserverbundteilen kann hierbei über 50% der Gesamtkosten des Bauteils ausmachen.

Aus der EP 1 724 098 A1 ist zur Verbesserung des Herstellungsverfahrens und zur Oberflächenveredelung eines Faserverbundbauteils bekannt, zunächst eine separate Materialschicht entsprechend der gewünschten Endform vorzuformen, auf diese vorgeformte Materialschicht Fasermaterial aufzutragen, das Fasermaterial mittels eines Harzes zu härten und so das Endprodukt zu bilden. Die zusätzliche Materialschicht verbindet sich dabei mit dem Fasermaterial und bildet insbesondere eine einseitige, gewünschte Oberfläche. Die vorgeformte zusätzliche Materialschicht kann mit dem aufgebrachten Fasermaterial auch als Vorformling zur Endverarbeitung transportiert werden. Dabei dient die vorgeformte Materialschicht gewissermaßen als Matrize. Für die zusätzliche Materialschicht ist die Verwendung von Kunststofffolien aus PET (Polyethylen-Terephthalat), PC (Polycarbonat), PA (Polyamid), PMMA (Polymethylmethacrylat), PBT (Polybutylenterephthalat), PUR (Polyurethan) sowie Acryl-Filme oder Mischungen der vorgenannten Materialien bevorzugt.

Ein ähnliches Verfahren offenbart die DE 10 309 811 A1, wobei mittels eines Formwerkzeugs, das die Topographie der Oberfläche des fertigen Bauteils aufweist, eine der Endform des gewünschten Bauteils angeformte Kunststofffolie erzeugt wird. Auf die Seite der vorgeformten Folie, die nicht die Oberfläche des fertigen Bauteils ist, wird ein faserverstärkter Kunststoff aufgebracht. Nach Aushärten des verstärkten Kunststoffs wird das fertige Bauteil entnommen.

Dasselbe. Verfahren zur Herstellung eines oberflächenveredelten Faserverbundwerkstoffs ist auch aus der DE 10 2008 009 438 A1 entnehmbar. Dazu wird eine zugeschnittene Oberflächenfolie bis zur Erweichungstemperatur erwärmt und in einem Formwerkzeug entsprechend der Topographie des herzustellenden Formteiles geformt. Auf die Innenseite der vorgeformten Oberflächenfolie wird ein Fasergewebe und ein Polymerharz aufgebracht, entsprechend der Topographie des Formteils geformt und ausgehärtet. Das fertige Bauteil wird nach dem Aushärten dem Formwerkzeug entnommen.

Nachteiligerweise wird bei diesem Verfahren als ein zusätzlicher Arbeitsschritt ein separates Vorformen der späteren Oberfläche notwendig. Darüber hinaus ist mit dem angegebenen Verfahren nur eine einseitige Oberflächenveredelung möglich.

Zu einem alternativen Herstellungsverfahren für einen Faserverbundwerkstoff ist es aus der DE 20 2005 005 475 U1 bekannt, einen profilierten Vorformling in Sandwichbauweise heranzuziehen. Dabei weist der Vorformling einen Stapel aus Kern- und Folien-Lagen auf. Im Inneren befindet sich ggf. auf einem Versteifungskem eine unreagierte Fasermaterial-Harz-Schicht. Darüber ist eine Deckfolienschicht, eine Vliesschicht und zur Abschließung gegen die Umgebung eine dauerelastische Folienschicht angeordnet. Der Vorformling soll sich wie eine Folie verhalten, so dass er mittels einer Folientiefziehanlage in Form gebracht und ausgehärtet werden kann.

Nachteiligerweise ist der Vorformling in Sandwichaufbau aufgrund mangelnder mechanischer Stabilität nur schlecht transportierbar. Auf dem Transportweg kann zudem das eingebrachte Harz in unerwünschter Weise aushärten.

Auch aus der DE 100 27 129 C1 ist ein Vorformling zur Herstellung eines Bauteils aus einem Faserverbundwerkstoff bekannt. Der Vorformling besteht dabei aus Fasermaterial, auch in Form von Lagen, welches bereits räumlich ausgebildet sein kann. Das Fasermaterial ist von einem Umhüllungsmittel umschlossen, welches aus einem kunststoffelastischen Zwischenmaterial besteht. Das Umhüllurlgsmittel ist beispielsweise in schlauch- oder kissenförmiger Gestalt vorgesehen. Durch das Vorsehen des Umhüllungsmittels kann die bisherige Verwendung von Trennmitteln zwischen Einlegeteilen und Formwerkzeug entfallen. Durch das Umhüllungsmittel kommt das Formwerkzeug nicht mit dem Harz in Berührung. Zur Ausbildung des fertigen Bauteils wird das Harz in das Innere des Umhüllungsmittels eingebracht, insbesondere eingesaugt, wobei das Fasermaterial getränkt wird.

EP 0 549 110 wird als nächstliegender Stand der Technik gegenüber dem Gegenstand der Ansprüche 1 und 13 angesehen. Es offenbart ein Bauteil sowie ein Verfahren zum Herstellen dieses Bauteils aus einem Faserverbundwerkstoff, wobei ein Folienverbund mit einer thermoplastischen Deckfolie und mit einer thermoplastischen Innenfolie hergestellt wird, der Folienverbund mit der Innenfolie einem ein Fasermaterial und einen Duroplasten umfassenden Formling angebunden wird und der Formling ausgehärtet wird.

Das elastische Umhüllungsmittel führt nachteiligerweise zu einer unerwünschten Vorspannung, die die Bauteilausformung verändern kann. Zwar ist kein Trennmittel für das Formwerkzeug erforderlich. Das Umhüllungsmittel muss jedoch vom fertigen Bauteil aufwändig entfernt werden.

Aufgabe der Erfindung ist es, ein vereinfachtes Herstellungsverfahren für ein oberflächenveredeltes Bauteil aus einem Faserverbundwerkstoff anzugeben. Eine weitere Aufgabe der Erfindung ist es, ein einfach herstellbares Faserverbundbauteil mit einer veredelten Oberfläche zur Verfügung zu stellen.

Die erstgenannte Aufgabe wird erfindungsgemäß gelöst durch ein Verfahren zum Herstellen eines Bauteils aus einem Faserverbundwerkstoff, wobei ein Folienverbund mit einer thermoplastischen Deckfolie und mit einer thermoplastischen Innenfolie hergestellt wird, wobei der Elastizitätsmodul der Innenfolie innerhalb eines Temperaturbereiches kleiner als der Elastizitätsmodul der Deckfolie ist, wobei der Folienverbund mit der Innenfolie einem ein Fasermaterial und einen Duroplasten umfassenden Formling angebunden wird, wobei der Formling ausgehärtet wird, und wobei der Folienverbund einer Wärmebehandlung im Temperaturbereich, innerhalb dessen der Elastizitätsmodul der Innenfolie kleiner als der Elastizitätsmodul der Deckfolie ist, unterzogen wird, wobei die Deckfolie spannungsrelaxiert.

Die einzelnen Herstellungsschritte müssen dabei nicht zwangsläufig in der angegebenen Reihenfolge ablaufen. Vielmehr kann die Abfolge auch sinnhaft variiert werden. Insbesondere kann die Anbindung des Folienverbunds vor, mit oder auch nach der Aushärtung des Formlings vorgenommen werden. Auch muss die Wärmebehandlung des Folienverbunds nicht zwangsläufig nach der Aushärtung des Formlings erfolgen, sondern kann insbesondere auch während der Aushärtung des Formlings, bevorzugt bei gleichzeitiger Umformung des Formlings zu einem Endprodukt, stattfinden.

Die Erfindung geht von der Überlegung aus, zur Oberflächenveredelung eines Faserverbundbauteils einen prozessintegrierten Ansatz zu finden. Insbesondere soll auf aufwändige zusätzliche Prozessschritte zur Vermeidung einer Ausbildung der Faserabzeichnung, wie beispielsweise auf eine vorgeformte zusätzliche Materialschicht, oder auf eine nachträgliche Nivellierung der ungewollten Abzeichnung, wie beispielsweise den Auftrag einer gespachtelten und geschliffenen Füllerschicht, die nachträgliche Aufklebung von Folien oder die mehrmalige Lackierung mit Zwischenhärtung und Schleifen, möglichst verzichtet werden. Solche zusätzlich notwendigen Prozessschritte führen zu einem gesteigerten Einsatz von Hilfsstoffen, zur Erhöhung der Zykluszeit, zu einer zusätzlichen Bindung von Kapital und Anlagen sowie zu einer verminderten Wettbewerbsfähigkeit der Faserverbundbauteile gegenüber bestehenden metallischen Lösungen. Durch einen prozessintegrierten Ansatz lassen sich diese Nachteile vermeiden.

Die Erfindung geht dazu in einem ersten Schritt von der grundsätzlichen physikalischen Beobachtung aus, dass materielle Objekte nach einem möglichst niedrigen energetischen Zustand streben. Insbesondere streben unter einer mechanischen Spannung stehende Objekte soweit möglich einen energetisch niedrigeren Zustand an, indem sie beispielsweise durch eine Verformung reagieren und hierdurch relaxieren.

In einem zweiten Schritt geht die Erfindung von der Überlegung aus, dass durch Anbindung einer thermoplastischen Folie an den Formling, beispielsweise durch eine Druck- oder Wärmebehandlung vor, während oder nach dem Einbringen des Duroplasten, zu Beginn der chemischen Reaktion des Duroplasten, die zu dessen Erstarrung führt, eine glatte Oberfläche erreicht werden kann. Die thermoplastische Folie ist dann durch Ausbildung von Adhäsionskräften fest mit dem Verbundaufbau des Formlings verbunden. Da die Matrix aus dem Duroplasten jedoch im Laufe der Aushärtung zunehmend einen Schwund aufweist, welcher in seiner Stärke lokal variiert, wird die Folie entsprechend der Faserabzeichnung verspannt. Dabei zeichnen sich die Faserbündel des Fasermaterials durch die Folie hindurch bis an die Oberfläche ab. Mit anderen Worten führt die mit zunehmendem Aushärtegrad der Matrix einhergehende Reduktion des Matrixvolumens zu einem lokal variierenden Anstieg der Folienspannung, da die Folie dem Verbundaufbau fest angebunden ist. In der Folie kommt es zu lokalen Einfallstellen, die ein Durchscheinen der Faserarchitektur an der Oberfläche mit sich bringen. An den Einfallstellen kommt es zu einem lokalen Anstieg der Folienspannung.

In einem dritten Schritt erkennt die Erfindung, dass das physikalische Streben der Folie nach einer Spannungsreduktion durch unterschiedliche thermische Elastizitätsmodulprofile im Folienaufbau zur Glättung der Oberfläche in einem Temperprozess ausgenutzt werden kann. Wird nämlich ein Folienverbund mit einer thermoplastischen Deckfolie und einer thermoplastischen Innenfolie hergestellt, wobei der Elastizitätsmodul der Innenfolie innerhalb eines bestimmten Temperaturbereiches kleiner als der Elastizitätsmodul der Deckfolie ist, so wird die Deckfolie im Bereich der unterschiedlichen Elastizitätsmoduln aufgrund ihres größeren Elastizitätsmoduls, also dem Proportionalitätsfaktor zwischen Spannung und Dehnung, unter Glättung relaxieren, wobei die Innenfolie durch Verformung folgt. Insgesamt wird der geglättete Zustand mit relaxierter Deckfolie gegenüber dem Ausgangszustand eine niedrigere Energie aufweisen, so dass die glatte Oberfläche verbleibt. Die Deckfolie ist über eine reduzierte Dehnung spannungsrelaxiert, wobei sich eine Glättung der Oberfläche einstellt.

Mit anderen Worten erlaubt die Erfindung die Herstellung eines Faserverbundbauteils, wobei als äußere Oberfläche dem Verbundaufbau eine Folie insbesondere durch Adhäsion dauerhaft und fest angebunden ist und wobei die unerwünschte Abzeichnung der Faserarchitektur durch einen einfachen Wärmebehandlurigs- oder Temperprozess ohne weitere aufwändige Zusatzmaßnahmen beseitigt ist. Der angebundene thermoplastische Folienverbund führt darüber hinaus zu einer Verbesserung der Splittereigenschaften des Faserverbundbauteils.

Die Erfindung bedient sich dabei in einem Materialverbund dem selbstständig ablaufenden Prozess einer gerichteten Relaxation unter Energiereduktion, um durch eine Wärmebehandlung eine gewünschte Verbesserung der Oberflächeneigenschaften zu erzielen.

Die Erfindung schließt dabei insbesondere auch nicht aus, dass der Relaxationsprozess selbstständig bei Raumtemperatur stattfindet. Im Allgemeinen wird man jedoch bestrebt sein, die Wärmebehandlung bei höheren Temperaturen durchzuführen, um die Relaxationsgeschwindigkeit zu erhöhen.

Die Aushärtung der Duroplaste erfolgt durch eine Vernetzung von Polymerketten untereinander oder mit Monomeren (Polykondensation, Polyaddition, Polymerisation). Die Vernetzung oder Aushärtung wird mittels Wärme, Strahlung oder chemischen Additiven initiiert. Nach der Härtereaktion ist der Formling somit chemisch, also durch eine dauerhafte, duroplastische Vernetzung ausgehärtet. Er erhält insgesamt einen duroplastischen Charakter.

Bevorzugt wird der Folienverbund mit einer thermoplastischen Deckfolie und mit einer thermoplastischen Innenfolie hergestellt, wobei die Erweichungstemperatur der Innenfolie niedriger als die Erweichungstemperatur der Deckfolie ist, und wobei der Folienverbund der Wärmebehandlung bei einer Temperatur zwischen den beiden Erweichungstemperaturen unterzogen wird, wobei die Innenfolie durch Erweichung spannungsrelaxiert.

Bei dieser vorteilhaften Weiterbildung wird der Vorgang des Spannungsabbaus dadurch gerichtet, indem in der Innenfolie ab Erreichen der Erweichungstemperatur der Elastizitätsmodul sinkt, während in der Deckfolie durch Glättung die Dehnung reduziert wird. Bekanntermaßen sinkt der Elastizitätsmodul insbesondere in einem Kunststoff ab Erreichen der Erweichungstemperatur, die auch als Glasübergangstemperatur T_{g} bezeichnet wird, ab. Der Kunststoff geht von einem spröden Zustand mit einem hohen Elastizitätsmodul in einen weichen Zustand mit einem verringerten Elastizitätsmodul über. Der Übergang in die flüssige Phase ist hierbei fließend.

Wird die Wärmebehandlung für den Folienverbund bei einer Temperatur zwischen der Erweichungstemperatur der Innenfolie und der Erweichungstemperatur der Deckfolie durchgeführt, so reduziert sich folgerichtig die Spannung in der Innenfolie durch Erweichung, also durch das thermische Absenken des Elastizitätsmoduls. Das Material der Innenfolie fließt in die Bereiche der erhöhten Spannungen der Deckfolie und tritt dabei an die Stellen, die vormals mit duroplastischer Matrix ausgefüllt waren. Zeitgleich tritt eine Spannungsminderung in der Deckfolie durch deren Anhebung ein, die das Fließen des Materials der Innenfolie zusätzlich fördert. Mit anderen Worten erweicht die Innenfolie und wird in Dickenrichtung plastisch deformierbar, während die Außenfolie weiterhin Spannungen aufnimmt. In diesem Temperaturbereich kommt es zu einer Energiereduktion der Deckfolie durch Relaxation eben jener Spannungen, die durch die Faserabzeichnungen eingetragen wurden. Im Bereich der Innenfolie reduziert sich das Spannungsniveau durch Reduktion des Elastizitätsmoduls. Material der inneren Folie fließt somit in die Bereiche lokalen Unterdrucks, der durch die Spannung der Deckfolie induziert wurde. Während der Aushärtung der duroplastischen Matrix aufgetretenen Faserabzeichnungen reduzieren sich durch ein einfaches Erwärmen.

Der eingesetzte Wirkmechanismus basiert auf dem gerichteten Relaxieren des Folienverbundes, wobei dieser Folienverbund infolge der Schrumpfung des Duroplasten vor der Wärmebehandlung eingedellt ist und somit lokal unter Spannung steht. Durch die Kombination der Wärmebehandlung mit den verschiedenen Erweichungstemperaturen relaxiert die Spannung der Innenfolie über einen Abfall des Elastizitätsmoduls und die Deckfolie relaxiert über eine reduzierte Dehnung, wobei sich eine Glättung der Oberfläche einstellt.

Ein Wärmebehandlungsprozess zur Glättung der Oberfläche lässt sich problemlos in einen bestehenden Prozess zur Herstellung eines Faserverbundbauteils integrieren, da in der Regel die Umformung und Aushärtung des Formlings oder des Vorformlings unter Temperatureinwirkung stattfindet. Werden beispielsweise trockene Faservorformlinge (Preformen) mittels eines RTM-Verfahrens prozessiert, so stellt die Belegungszeit der Presse einen dominanten Kostenfaktor dar. In Folge dessen werden Matrixsysteme beim RTM-Verfahren in der Presse zur Einsparung von Zykluszeit nur zum Teil gehärtet und nachfolgend in einem Ofen vollständig zur Aushärtung gebracht. Dieser nachträgliche Prozess einer Temperatureinwirkung ohne Formenzwang führt durch die nochmalige Reduktion des Volumens der Matrix verstärkt zu einer ungewünschten Faserabzeichnung. Diese nachträgliche Temperung kann jedoch im Sinne der vorliegenden Erfindung auch unmittelbar und ohne weitere Prozessschritte zur Glättung des angegebenen Folienverbunds herangezogen werden. Unter dem RTM-Verfahren wird hierbei ein sogenanntes Resin-Transfer-Moulding-Verfahren verstanden, wobei die Aushärtung des Duroplasten kombiniert mit einem Präge- bzw. Umformschritt erfolgt. Die Wärmebehandlung des Folienverbunds kann alternativ aber auch in einfacher Art und Weise unter Ressourcenschonung durch Heißluft oder durch eine Wärmebestrahlung erfolgen, wobei der dem Formling oder dem Bauteil angebundene Folienverbund lokal zur Glättung behandelt wird.

Im Laufe des vorliegenden Verfahrens wird die Innenfolie dem Formling angebunden. Diese Anbindung kann vor, während oder nach der Aushärtung des Formlings und insbesondere wiederum prozessintegriert erfolgen und beruht auf einer Adhäsion. Diese Adhäsion resultiert unter anderem aus einer mechanischen Verankerung, wobei Poren und Vertiefungen der Innenfolie beispielsweise vom flüssigen Duroplasten während der Tränkung durchdrungen werden und im ausgehärteten, festen Zustand Hinterschneidungen bilden. Andererseits kann abhängig vom eingesetzten Duroplasten und der eingesetzten thermoplastischen Innenfolie während der Herstellung auch eine sogenannte Autoadhäsion erfolgen, wobei sich die Kohlenwasserstoffketten der verwendeten Polymere aufeinander legen oder sich gegenseitig durchdringen, so dass beide Materialien letztendlich durch zwischenmolekulare Kräfte gehalten werden. Ebenfalls können elektrostatische Wechselwirkungen, Van-der-Waals-Kräfte, Dipolwechselwirkungen und dergleichen zu einer spezifischen Adhäsion im fertigen Bauteil führen. All diese teilweise nicht klar trennbaren Adhäsionseffekte können im Sinne der Erfindung zu einer dauerhaften und unlösbaren Bindung der Folie während der Aushärtung ausgenutzt werden. Die Erfindung schließt insofern solche Materialpaarungen zwischen der thermoplastischen Innenfolie und dem Duroplasten aus, die nach Aushärtung leicht voneinander trennbar sind. Beispielsweise ist dies bei Kunststoffen der Fall, wenn diese sich hinsichtlich ihrer Polarität oder chemisch unterscheiden, so dass beispielsweise in der flüssigen Phase keine gegenseitige Benetzung oder Durchdringung erfolgen kann. Solche Materialpaarungen sind beispielsweise üblich, um einen Folienüberzug leicht abziehbar auszugestalten.

Die Innenfolie ist vorteilhaft so ausgewählt, dass sie sich beispielsweise durch eine Erwärmung als flüssige Phase mit dem Duroplasten vermischt oder in das Fasermaterial eindringt. Nach dem Aushärten ist hierdurch eine dauerfeste, durch Formschluss unlösbare Verbindung entstanden. Diese Verbindung kann auch als eine mechanische Adhäsion bezeichnet werden.

Bevorzugt wird der Formling vor der Wärmebehandlung zur Spannungsrelaxation der Deckfolie umgeformt. Alternativ kann es jedoch vorgesehen sein, die Glättung der Deckfolie durch eine Wärmebehandlung während der Umformung in einem einzigen Arbeitsschritt vorzunehmen. Wird zur Herstellung insbesondere das Einbringen des Duroplasten, das Umformen und das Aushärten nach dem RTM-Verfahren zeitnah in einem Arbeits- oder Prägeschritt kombiniert, so erlaubt es die Erfindung auch, gegebenenfalls während dieses Prägeschrittes zugleich die Glättung des Folienverbunds zu erreichen.

In einer weiter bevorzugten Ausgestaltung wird der Folienverbund dem Formling dadurch angebunden, dass der Folienverbund mit der Innenfolie einem trockenen Fasermaterial aufgelegt und die Innenfolie durch eine Wärmebehandlung erweicht wird, wobei Material der erweichten Innenfolie in das Fasermaterial eindringt. Erst anschließend wird der Duroplast unter Tränkung des Fasermaterials flüssig eingebracht. Bei diesem Verfahren verbindet sich demnach das Material der Innenfolie durch Temperatureinwirkung vor der Einbringung des Duroplasten mit den Fasern des trockenen Fasermaterials, wodurch einzelne Filamente des Faserhalbzeuges mit der Folieninnenseite verlötet werden. Nach der Tränkung des trockenen Fasermaterials mit dem Duroplasten und dessen Aushärtung treten zunächst Faserabzeichnungen auf. Diese Faserabzeichnungen reduzieren sich durch die erneute Wärmebehandlung des Bauteils. Die thermische Anbindung der Innenfolie an das Fasermaterial kann durch mechanische Druck- oder Vakuumeinwirkung unterstützt werden. Hierdurch kann die Eindringtiefe des erweichten Materials der Innenfolie in das Fasermaterial gesteuert werden. Wird der so entstandene Aufbau mit dem Duroplasten benetzt, so werden einzelne Filamente des Fasermaterials abschnittsweise im Material der Innenfolie und abschnittsweise in der duroplastischen Matrix eingebettet.

Durch Schnittversuche an derart hergestellten Faserverbundbauteilen konnte gezeigt werden, dass ein Versagen der duroplastischen Matrix noch vor einem Versagen der mechanisch angebundenen Innenfolie auftritt.

In einer Alternative wird der Folienverbund dem Formling dadurch angebunden, dass der Folienverbund mit der Innenfolie einem trockenen Fasermaterial aufgelegt, dann der Duroplast unter Tränkung des Fasermaterials flüssig eingebracht, und anschließend die Innenfolie durch eine Wärmebehandlung erweicht wird. Dabei dringt Material der erweichten Innenfolie lokal in das Fasermaterial ein und/oder vermischt sich alternativ oder zusätzlich mit dem Duroplasten und/oder bildet hierbei einen adhäsiven Grenzbereich mit dem Duroplasten aus. Mit anderen Worten ist hierbei die Erweichung des Materials der Innenfolie mit dem Aushärten des Duroplasten gekoppelt. Auch hierdurch entsteht eine dauerhafte Anbindung durch Hinterschnitt. Auch dieses Verfahren kann druck- und/oder vakuumunterstützt durchgeführt werden.

Bevorzugt wird der flüssige Duroplast mittels einer Druckdifferenz eingebracht. Dies kann beispielsweise durch eine Infiltration geschehen, wobei an dem Vorformling ein Unterdruck angelegt wird, so dass der noch flüssige Duroplast als Bindermaterial in den Innenraum eingesogen wird. Hierdurch wird eine gleichmäßige Durchtränkung des Fasermaterials erzielt. Andererseits kann die Tränkung auch durch eine Injektion erfolgen, wobei der flüssige Duroplast selbst unter Druck in den Innenraum eingebracht wird. Bei beiden Möglichkeiten wird jeweils ein im Innenraum des Vorformlings vorhandener Druck sinnvoll zur Einbringung genutzt.

Der angegebene Folienverbund bindet sich während des Herstellungsverfahrens insbesondere prozessintegriert dem Bauteil dauerhaft als Oberfläche an. Die thermoplastische Folie wird beispielsweise bei der Umformung des Formlings unter Temperatureinwirkung an eine gewünschte Topographie des fertigen Bauteils angepasst. Dazu ist kein zusätzlicher Prozessschritt notwendig, wie dies bisher bei der Formgebung einer äußeren Materialschicht notwendig war.

Nach Aushärtung des Duroplasten und vollzogener Wärmebehandlung zur Relaxation der Deckfolie entsteht ein Bauteil aus einem Faserverbundwerkstoff, dessen maßgebliche Oberflächeneigenschaften durch den Folienverbund bestimmt werden. Werden die Oberflächeneigenschaften maßgeblich von einer Folie bestimmt, so führt dies zu einer gesteigerten Modularisierbarkeit. Während bei Unternehmen mit geringer Fertigungstiefe oder bei mehreren Zulieferern Farb- und Oberflächenunterschiede im Endprodukt auftreten können, ist dies sicher vermieden, wenn als Zulieferer für den Folienverbund ein zentraler Folienproduzent herangezogen wird. Die Prozessparameter für die Oberflächensubstanz sind von den Parametern zur Herstellung der Struktur separiert. Eine Folie kann in eigenen Prozessen gefertigt werden, wodurch eine Vielzahl von Materialen mit unterschiedlichen Eigenschaften vergleichsweise kostengünstig hergestellt werden können. Auch können mehrere solcher Materialen mit gewünschten Eigenschaften in Schichten zu einer Gesamtfolie verbunden werden, wobei die Erfindung lediglich eine äußere Deckfolie und eine Innenfolie mit zueinander spezifischen Eigenschaften hinsichtlich des Elastizitätsmoduls vorsieht. Das Einbinden zusätzlicher Folienschichten ist nicht ausgeschlossen, sondern gegebenenfalls sogar bevorzugt.

Durch den als Oberfläche angebundenen Folienverbund wird es möglich, gewünschte Oberflächeneigenschaften von Verbundwerkstoffbauteilen durch Adaption einer Folienherstellung zu erreichen, während andererseits das Herstellungsverfahren für das Faserverbundbauteil nicht um aufwändige Prozessschritte ergänzt werden muss.

Die Anbindung des Folienverbunds zur Oberflächenveredelung des fertigen Bauteils kann bevorzugt auch dadurch erfolgen, dass die Folie zugleich zur besseren Handhabung eines trockenen Vorformlings aus Faserlagen herangezogen wird. Dazu wird ein Stapel aus trockenen Lagen eines Fasermaterials vor seiner Tränkung mit dem thermoplastischen Folienverbund umhüllt. Anschließend wird der Innenraum zwischen dem Folienverbund mit den ungetränkten trockenen Lagen des Fasermaterials abgepumpt oder evakuiert.

Damit erhält man einen von Außeneinflüssen wie Staub und Feuchtigkeit geschützten Vorformling, der im Gegensatz zu einem unfolierten Vorformling aufgrund der höheren Eigensteifigkeit beispielsweise automatisiert positioniert werden kann. Der eingeschweißte trockene Vorformling ist alterungsbeständig und kann somit auch über längere Wegstrecken transportiert werden. Es besteht nicht die Gefahr eines unerwünschten Aushärtens, wie beispielsweise bei einem getränkten Prepreg, da kein Bindermaterial zur Formstabilisierung des Fasermaterials oder zur Vorkonfektionierung eines Vorformlings in Gestalt eines Sandwichaufbaus eingesetzt ist.

Durch einen transportstabilen Vorformling können die logistischen Vorteile eines dezentralisierten Pressenprozesses durch reduzierte Ablegezeiten in der Pressenkavität ausgeschöpft werden. Erst unmittelbar vor oder während der endgültigen Formgebung kann in den Innenraum zwischen den Folien der flüssige Duroplast unter Tränkung des Fasermaterials eingebracht werden. Der Unterdruck im Innenraum kann hierbei vorteilhaft zu der gewünschten gleichmäßigen Durchtränkung des Fasermaterials verwendet werden.

Die Herstellung des Folienverbunds kann grundsätzlich über verschiedene bekannte Verfahren erfolgen. Beispielsweise können Deckfolie und Innenfolie miteinander verpresst oder kalandiert werden. Auch kann eine der beiden Folien als Deckfolie hergestellt und die andere Folie auf- bzw. angespritzt werden. Im letzteren Fall erfolgt die Bindung der beiden Folien aneinander beispielsweise durch eine nachfolgende chemische Reaktion. Auch ist es möglich, den Folienverbund dadurch herzustellen, dass auf eine Deckfolie ein Monomer und ein Reaktionspartner aufgebracht werden, der zur Polymerisation der zweiten Folie führt.

Bevorzugt wird der Folienverbund durch eine Koextrusion von Deckfolie und Innenfolie hergestellt. Das Verfahren der Koextrusion wird technisch beherrscht und ist als gängiges Verfahren vergleichsweise günstig. Durch Koextrusion wird die Verbindung von Deckfolie und Innenfolie durch gleichzeitiges Aufschmelzen der Materialen beider Folien hergestellt. Dabei durchdringen sich die Polymere gegenseitig und können auch chemisch reagieren. Die beiden Folien sind insbesondere durch eine mechanische Adhäsion und/oder chemisch aneinander gebunden.

Durch das Vorsehen einer Innenfolie und einer Deckfolie kann zudem die Funktion des Haftens von den gewünschten Oberflächeneigenschaften entkoppelt werden. Dies ermöglicht es, für die Deckfolie alleine das für die gewünschten Oberflächeneigenschaften optimierte Material einzusetzen. Beispielsweise kann eine Oberflächeneigenschaft wie Säurebeständigkeit, Alterungsbeständigkeit, Witterungsbeständigkeit, Härte, Haptik oder auch Farbgebung etc. im Folienverbund separat der äußeren Deckschicht zugewiesen werden.

Als Fasern können Glasfasern, Kohlefasern, Naturfasern, thermoplastische Kunststofffasern und/oder Aramidfasern verwendet werden. Damit kann Bezug genommen werden auf die späteren charakteristischen Eigenschaften des gewünschten Faserverbundbauteils. Das Fasermaterial selbst ist bevorzugt textil ausgebildet, wobei die Fasern zu einem Fasergelege, einem Fasergewebe, einem Fasergewirke, einem Fasergestricke und/oder zu einem Faservlies miteinander verbunden sind. Alternativ ist auch die Verwendung eines Faserpapiers möglich. Letzteres unterscheidet sich von einem Faservlies, wobei üblicherweise ungeordnete Fasern beispielsweise durch Nadeln miteinander verbunden sind, durch die feinere Struktur der Fasern und die durch Pressung erzeugte innere Oberfläche. Andererseits sind auch Faservliese bekannt, bei denen die Fasern entlang einer Vorzugsrichtung ausgerichtet sind.

Vorteilhafterweise wird ein Fasermaterial eingesetzt, dessen Faserorientierung eine Vorzugsrichtung aufweist. Derartige Fasermaterialien werden zunehmend für Bauteile aus einem Faserverbundwerkstoff mit vorgegebenen mechanischen Eigenschaften eingesetzt. Wirrfaserhalbzeuge können unterstützende Funktionen beim Erreichen gewünschter Oberflächeneigenschaften an der Oberfläche des Faseraufbaus wahrnehmen. Hierzu werden diese zwischen Folienverbund und gerichteten Faserhalbzeugen eingebracht.

Dazu wird in einer weiter bevorzugten Variante einem Fasermaterial mit einer Faserorientierung entlang einer Vorzugsrichtung ein gewirrtes Fasermaterial aufgelegt, und der Folienverbund dem aufgebrachten gewirrten Fasermaterial angebunden. Hierdurch kann die Foliendicke im Folienverbund reduziert werden, da die durch die Relaxation der Folien auszugleichenden Unebenheiten auf der Oberfläche des ausgehärteten Faserverbundes verringert sind. Die insbesondere eingebrachten Oberflächenvliese dienen dabei vornehmlich der Oberflächenverbesserung und tragen nur gering zum strukturellen Kennwert des Aufbaus bei. Der überwiegende Anteil des Fasermaterials ist durch ein Fasermaterial gebildet, dessen Fasern entlang einer Vorzugsrichtung ausgerichtet sind. Die mechanischen Eigenschaften des fertigen Bauteils sind insofern durch das orientierte Fasermaterial gegeben.

Als Deckfolie wird bevorzugt ein Kunststoff, ausgewählt aus der Gruppe, die PMMA (Polymethylmethacrylat), PC (Polycarbonat), SAN (Styrol-Acrylnitril), PVF (Polyvinylfluorid), und PVC (Polyvinylchlorid) enthält, oder eine Kombination hiervon eingesetzt. Daneben sind auch günstige Kunststoffe wie PE (Polyethylen) oder PA (Polyamid) wählbar, wenn das Bauteil beispielsweise für einen Interieurbereich hergestellt wird.

Als Innenfolie wird bevorzugt ein Kunststoff, ausgewählt aus der Gruppe, die EVA (Ethylenvinylacetat), PCP (Polychlorierte Biphenyle), APAO (amorphe Polyalphaolefine), ABS (Acrylinitril-Butadien-Styrol), TPE-U (Thermoplastische Elastomere auf Urethanbasis), TPE-E (Thermoplastische Copolyester), TPE-A (Thermoplastische Copolyamide), EVOH (Ethylen-Vinyl-Alkohol) und PE (Polyethylen) enthält, oder eine Kombination hiervon verwendet.

Zur Herstellung des Folienverbunds ist jeweils mindestens ein Kunststoff aus der Gruppe der Materialen der Deckfolie und mindestens ein Kunststoff aus der Gruppe der Materialien der Innenfolie auszuwählen, wobei sich die Elastizitätsmoduln in wenigstens einem Temperaturbereich oder die Erweichungstemperaturen wie vorbeschrieben voneinander entsprechend unterscheiden. Beispielsweise wird als Deckfolie PC und als Innenfolie EVA eingesetzt. PC weist eine Erweichungstemperatur von etwa 220°C auf. EVA zeigt eine Erweichungstemperatur von etwa 150°C. Weitere Einzelpaarungen sind beispielsweise PC als Deckfolie und ABS als Innenfolie oder PMMA als Deckfolie und EVOH als Innenfolie.

Grundsätzlich lassen sich innerhalb der genannten Gruppen auch die jeweils aufgezählten Kunststoffe untereinander beliebig vermengen, um so für den jeweils gewünschten Einsatzzweck des Faserverbundbauteils die Elastizitätsmoduln oder Erweichungstemperaturen zu erhalten. Beispielsweise kann die Erweichungstemperatur niedriger eingestellt werden, wenn für das spätere Faserverbundbauteil eine geringere Temperaturempfindlichkeit gefordert ist. Anderenfalls ist die Erweichungstemperatur höher einzustellen, wenn das Faserverbundbauteil höheren Temperaturen standhalten soll.

Das Vorsehen einer äußeren Folie als Oberfläche des Faserverbundbauteils hat den weiteren großen Vorteil, dass sich das Bauteil problemlos thermisch mit weiteren Bauteilen fügen lässt. Die thermoplastische Folie lässt sich insbesondere sowohl mittels Schweißen als auch mittels Löten mit einem weiteren Bauteil fügen. Beim Schweißen werden beide Bauteile lokal oder flächig bis über die Erweichungstemperatur erhitzt. Dabei durchdringen sich die Materialen. Bei einer Fügung von Kunststoffen kann sich ein Grenzbereich ausbilden, in welchem sich die Polymere durch Bildung eines Diffusionsbereiches verbinden. Das Schweißverfahren eignet sich insofern insbesondere zum Fügen des vorgenannt hergestellten Bauteils mit einem weiteren Bauteil aus Kunststoff. Beim Löten wird nur ein Bauteil über die Erweichungstemperatur erwärmt. Durch Adhäsion und physikalische oder mechanische Bindung erfolgt dann die Bindung mit dem weiteren Bauteil. Durch Löten kann demnach das vorgenannt hergestellte Bauteil beispielsweise an ein weiteres Bauteil aus Metall gefügt werden. Ein wie vorbeschrieben hergestelltes Bauteil hat demnach den großen Vorteil, dass seine Fügung mit weiteren Bauteilen ohne ein Klebeverfahren vorgenommen werden kann.

Die eingangs genannte Aufgabe wird erfindungsgemäß weiter durch ein Bauteil aus einem Faserverbundwerkstoff gelöst, welches insbesondere nach dem vorbeschriebenen Verfahren hergestellt ist. Ein solches Bauteil umfasst ein in einer Matrix aus einem Duroplasten eingebundenes Fasermaterial, sowie eine Oberflächenschicht aus einem Folienverbund mit einer thermoplastischen Deckfolie und einer thermoplastischen Innenfolie, wobei der Elastizitätsmodul der Innenfolie innerhalb eines Temperaturbereiches kleiner als der Elastizitätsmodul der Deckfolie ist, wobei die Innenfolie dem Duroplasten und/oder dem Fasermaterial unmittelbar angebunden ist, und wobei die Deckfolie spannungsrelaxiert ist.

In einer bevorzugten Ausgestaltung ist die Erweichungstemperatur der Innenfolie niedriger als die Erweichungstemperatur der Deckfolie.

Weitere vorteilhafte Ausgestaltungen des Bauteils können sinngemäß den Ausführungen zum Herstellungsverfahren entnommen werden. Entsprechend ergeben sich hieraus für das Bauteil übertragene Vorteile.

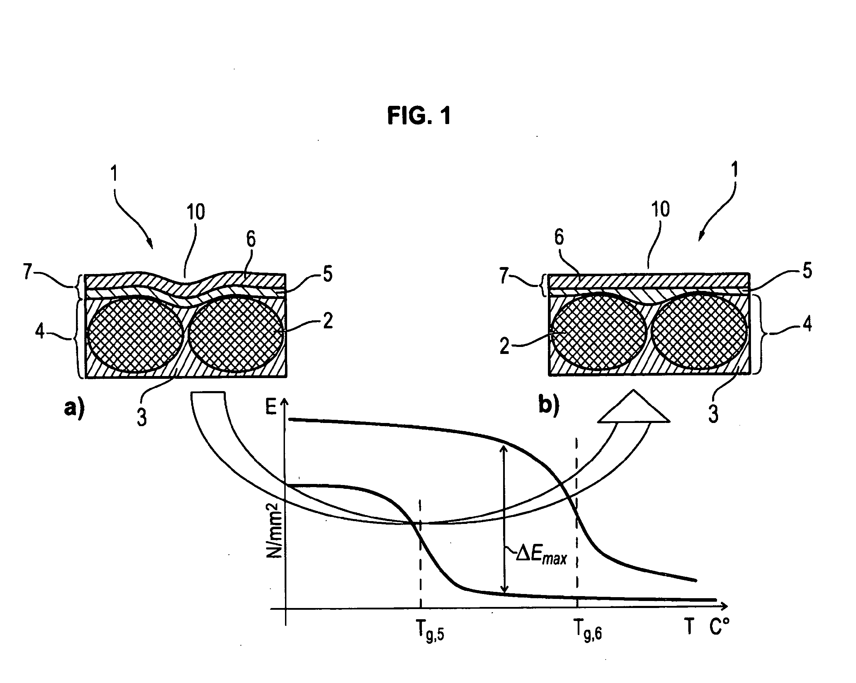

Ein Ausführungsbeispiel der Erfindung wird anhand einer Zeichnung näher erläutert. In der einzigen Figur 1 ist schematisch ein Bauteil 1 aus einem Faserverbundwerkstoff in zwei verschiedenen Bearbeitungszuständen a) und b) während des Herstellungsverfahrens dargestellt.

Das Bauteil 1 aus dem Faserverbundwerkstoff umfasst ein Fasermaterial bzw. Fasern 2, die in eine Matrix aus einem Duroplasten 3 eingebunden sind. Dem Formling 4 aus dem Fasermaterial 2 und dem Duroplasten 3 ist ein Folienverbund 7 aus einer Deckfolie 6 und einer Innenfolie 5 durch mechanische Adhäsion dauerfest angebunden. Als Duroplast 3 ist beispielsweise ein Epoxidharz vorgesehen. Die Innenfolie 5 ist aus EVA hergestellt. Die Deckfolie 6 besteht aus PC. Die Innenfolie 5 und die Deckfolie 6 sind als Folienverbund 7 beispielsweise durch Koextrusion hergestellt. Die Deckfolie 6 weist eine höhere Erweichungstemperatur als die Innenfolie 5 auf.

Der Folienverbund 7 wurde unter Temperatureinwirkung mit dem trockenen Fasermaterial 2 gepresst. Dabei erweicht das Material der Innenfolie 5, dringt in die ersten Faserschichten ein und bildet damit eine feste Anbindung zwischen dem Fasermaterial 2 und dem Folienverbund 7. Anschließend wird der so entstandene Aufbau mit dem Duroplasten 3 benetzt. Einzelne Filamente des Fasermaterials 2 werden abschnittsweise im Material der Innenfolie 5 und abschnittsweise im Material des Duroplasten 3 eingebettet. Nach Umformung des Formlings 4 mit angebundenem Folienverbund 7 erfolgt die Aushärtung des Duroplasten 3, beispielsweise durch einen Wärmeeintrag.

Zustand (a) zeigt das Bauteil 1 nach erfolgter Aushärtung des Duroplasten 3. Durch die Aushärtung des Duroplasten 3 kommt es zu einem Volumenschwund in der Matrix, was zu einem Spannungsaufbau in dem angebundenen Folienverbund 7 führt. Zwischen den Fasern des Fasermaterials 2 kommt es zu lokalen Einfallstellen 10. Die Faserarchitektur zeichnet sich in unerwünschter Weise durch den Folienverbund 7 hindurch ab.

Anschließend erfolgt eine Wärmebehandlung des Bauteils 1 bei einer Temperatur zwischen der Erweichungstemperatur der Innenfolie 5 und der Erweichungstemperatur der Deckfolie 6. Das eingezeichnete Diagramm zeigt hierzu den Temperaturverlauf der Elastizitätsmoduln E der beiden Folien 5, 6. Der Verlauf des niedrigeren Elastizitätsmoduls E gehört ist hierbei der Innenfolie 5 zugeordnet.

Bei Erreichen der jeweiligen Erweichungstemperatur T_{g} verringert sich der Elastizitätsmodul E. Der jeweilige Kunststoff geht von einem spröden Aggregatszustand mit hohem Elastizitätsmodul E in einen weichen Aggregatszustand mit niedrigem Elastizitätsmodul E über. Der weiche Kunststoff wird allmählich fließend.

Die Innenfolie 5, vorliegend EVA, ist derart ausgewählt, dass ihre Erweichungstemperatur T_{g,5} niedriger ist als die Erweichungstemperatur T_{g,6} der Deckfolie 6, vorliegend PC. Die Wärmebehandlung erfolgt bei einer Temperatur im Bereich zwischen den beiden Erweichungstemperaturen T_{g,5} und T_{g,6}, in dem sich eine maximale Differenz ΔEₘₐₓ zwischen den beiden Elastizitätsmoduln ergibt.

Wird das Bauteil 1 entsprechend Zustand a) über die Erweichungstemperatur T_{g,5} hinaus erwärmt, so kann in der Innenfolie 5 die an einer Einfallstelle 10 aufgebaute Spannung durch die Verringerung des Elastizitätsmoduls E abgebaut werden. Das Material der Innenfolie 5 wird plastisch deformierbar. Die Deckfolie 6 nimmt weiterhin Spannungen auf. In der Deckfolie 6 kommt es zu einer Energiereduktion durch Relaxation jener Spannungen, die durch die Faserabzeichnungen eingetragen wurden. Es kommt zu einer Anhebung der Deckfolie 6 im Bereich der Einfallstellen 10. Die Deckfolie 6 glättet sich. Das Material der inneren Folie 5 fließt in die Bereiche lokalen Unterdrucks, der durch die Spannung der Deckfolie 6 induziert wurde. Das durch die Anhebung der Deckfolie 6 wachsende Volumen wird durch nachfließendes Material der Innenfolie 5 ausgeglichen.

Es wird ersichtlich, dass durch eine einfache Wärmebehandlung die unerwünschte Abzeichnung der Faserarchitektur in der Oberfläche rückgängig gemacht wird, wobei durch geschickte Auswahl der Materialparameter und durch Verwendung eines Folienverbunds das Streben eines materiellen Objekts nach einem Zustand niedrigerer Energie ausgenutzt wird. Aufwändige Nachbearbeitungsschritte sind nicht notwendig.

In eigenen Versuchen wurden die Oberflächenqualitäten mit variierenden Schichtdicken des Folienverbunds 7, mit variierenden Verarbeitungsparametern (Injektionsdruck, Temperatur, Haltezeit) und Variationen im Faserhalbzeug (grobes Gewebe, feines Gewebe, Vlies, Gelege) erfasst. Ihnen allen ist gemeinsam, dass sich Faserabzeichnungen an der Oberfläche im Zustand a) in unterschiedlichen Stärken ausbilden.

Es wurde beobachtet, dass durch die Anwendung eines Folienverbunds aus einer Deckfolie und einer Innenfolie, wobei die Deckfolie innerhalb eines Temperaturbereichs ein höheres Elastizitätsmodul als die Innenfolie oder eine höhere Erweichungstemperatur als die Innenfolie aufweist, durch eine einfache Wärmebehandlung durch Erhitzen auf eine bestimmte Temperatur sich eine deutliche Verbesserung der Oberflächenqualität einstellt.

Zur Bestimmung der Oberflächenqualität wurde eigens ein mikroskopisches Verfahren entwickelt, bei dem auf das fertig hergestellte Bauteil ein Pigmentträger auf die Oberfläche aufgetragen und eben abgezogen wurde. Die intensivste Pigmentierung kann danach optisch an den Einfallstellen der Deckfolie ermittelt werden, da sich dort der Pigmentträger sammelt. Vorliegend wurde ein weißer Pigmentträger eingesetzt, so dass sich mit zunehmender Tiefe der Einfallstelle diese weiß färbt. Die mit dem Pigmentträger behandelte Fläche wurde mittels eines Mikroskops optisch erfasst und die Grauwerte anschließend ausgewertet. Durch Ausmessung des weißen Flächenanteils und durch eine zusätzliche qualitative Auswertung hinsichtlich des Einschlusses von weißen Flächen durch umgebende schwarze Bereiche konnte ein reproduzierbares Messverfahren zur Beurteilung der Oberflächeneigenschaften des Bauteils entwickelt werden. Das Messverfahren führt zur Ausgabe eines Vergleichsindex. Die Standardabweichung für das Messverfahren betrug 4%.

In allen durchgeführten Versuchen konnte durch Anwendung der einfachen Wärmebehandlung festgestellt werden, dass sich die Oberflächeneigenschaften deutlich verbessern. Die einfache Wärmebehandlung im bestimmten Temperaturbereich führt zu einer Glättung der Deckfolie durch Spannungsrelaxation. Aufwändige Nachbearbeitungs- oder Zusatzschritte zum Erreichen von glatten Oberflächen ohne Faserabzeichnung sind nicht mehr erforderlich.

### Bezugszeichenliste

- 1: Bauteil (aus Faserverbundwerkstoff)
- 2: Faser, Fasermaterial
- 3: Duroplast
- 4: Formling
- 5: Innenfolie
- 6: Deckfolie
- 7: Folienverbund
- 10: Einfallstelle

- E: Elastizitätsmodul
- T_{g}: Erweichungstemperatur
- (T_{g,5}): Erweichungstemperatur Innenfolie
- (T_{g,6}): Erweichungstemperatur Deckfolie

## Patentansprüche

1. Verfahren zum Herstellen eines Bauteils (1) aus einem Faserverbundwerkstoff, wobei
- ein Folienverbund (7) mit einer thermoplastischen Deckfolie (6) und mit einer thermoplastischen Innenfolie (5) hergestellt wird, wobei der Elastizitätsmodul (E) der Innenfolie (5) innerhalb eines Temperaturbereiches kleiner als der Elastizitätsmodul (E) der Deckfolie (6) ist,
- der Folienverbund (7) mit der Innenfolie (5) einem ein Fasermaterial (2) und einen Duroplasten (3) umfassenden Formlings (4) angebunden wird,
- der Formling (4) ausgehärtet wird, und
- der Folienverbund (7) einer Wärmebehandlung im Temperaturbereich, innerhalb dessen der Elastizitätsmodul (E) der Innenfolie (5) kleiner als der Elastizitätsmodul (E) der Deckfolie (6) ist, unterzogen wird, wobei die Deckfolie (6) spannungsrelaxiert.

2. Verfahren nach Anspruch 1,
wobei der Folienverbund (7) mit einer thermoplastischen Deckfolie (6) und mit einer thermoplastischen Innenfolie (5) hergestellt wird, wobei die Erweichungstemperatur (T_{g,5}) der Innenfolie (5) niedriger als die Erweichungstemperatur (T_{g,6}) der Deckfolie (6) ist, und wobei der Folienverbund (7) einer Wärmebehandlung bei einer Temperatur zwischen den beiden Erweichungstemperaturen (T_{g,5}, T_{g,6}) unterzogen wird, wobei die Innenfolie (5) durch Erweichung spannungsrelaxiert.

3. Verfahren nach Anspruch 1 oder 2,
wobei der Formling (7) vor der Wärmebehandlung zur Spannungsrelaxation der Deckfolie (5) umgeformt wird.

4. Verfahren nach einem der Ansprüche 1 bis 3,
wobei der Folienverbund (7) dem Formling (4) angebunden wird, indem der Folienverbund (7) mit der Innenfolie (5) einem trockenen Fasermaterial (2) aufgelegt und die Innenfolie (5) durch eine Wärmebehandlung erweicht wird, wobei Material der erweichten Innenfolie (5) in das Fasermaterial (2) eindringt, und anschließend der Duroplast (3) unter Tränkung des Fasermaterials (2) flüssig eingebracht wird.

5. Verfahren nach einem der Ansprüche 1 bis 3,
wobei der Folienverbund (7) dem Formling (4) angebunden wird, indem der Folienverbund (7) mit der Innenfolie (5) einem trockenen Fasermaterial (2) aufgelegt, dann der Duroplast (3) unter Tränkung des Fasermaterials (2) flüssig eingebracht, und anschließend die Innenfolie (5) durch eine Wärmebehandlung erweicht wird, wobei Material der erweichten Innenfolie (5) in das Fasermaterial (2) eindringt und/oder mit dem Duroplasten (3) einen adhäsiven Grenzbereich bildet.

6. Verfahren nach Anspruch 4 oder 5,
wobei der Duroplast (3) mittels einer Druckdifferenz eingebracht wird.

7. Verfahren nach einem der Ansprüche 4 bis 6,
wobei das Einbringen des Duroplasten (3), das Umformen und das Aüshärten nach einem RTM-Verfahren zeitnah kombiniert in einem Prägeschritt erfolgt.

8. Verfahren nach einem der vorhergehenden Ansprüche,
wobei der Folienverbund (7) durch eine Koextrusion der Deckfolie (6) und der Innenfolie (5) hergestellt wird.

9. Verfahren nach einem der vorhergehenden Ansprüche,
wobei als Fasermaterial (2) ein Fasergelege, ein Fasergewebe, ein Fasergewirke, ein Faserpapier, ein Fasergestricke und/oder ein Faservlies verwendet wird.

10. Verfahren nach einem der vorhergehenden Ansprüche,
wobei als Fasern Glasfasern, Kohlefasern, Naturfasern, thermoplastische Kunststofffasern und/oder Aramidfasern verwendet werden.

11. Verfahren nach einem der vorhergehenden Ansprüche,
wobei als Deckfolie (6) ein Kunststoff, ausgewählt aus der Gruppe, die PMMA, PC, SAN, ASA, ABS, PVF und PVC enthält, oder eine Kombination hiervon verwendet wird.

12. Verfahren nach einem der vorhergehenden Ansprüche,
wobei als Innenfolie (5) ein Kunststoff, ausgewählt aus der Gruppe, die ABS, EVA, PCB, APAO, TPE-U, TPE-E, TPE-A, EVOH und PE enthält, oder eine Kombination hiervon verwendet wird.

13. Bauteil (1) aus einem Faserverbundwerkstoff, insbesondere hergestellt nach einem der Verfahren gemäß einem der vorhergehenden Ansprüche, umfassend ein in einer Matrix aus einem Duroplasten (3) eingebundenes Fasermaterial (2), sowie eine Oberflächenschicht aus einem Folienverbund (2) mit einer thermoplastischen Deckfolie (6) und einer thermoplastischen Innenfolie (5), wobei der Elastizitätsmodul (E) der Innenfolie (5) innerhalb eines Temperaturbereiches kleiner als der Elastizitätsmodul (E) der Deckfolie (6) ist, wobei die Innenfolie (5) dem Duroplasten (3) und/oder dem Fasermaterial (2) unmittelbar angebunden ist, und wobei die Deckfolie (6) spannungsrelaxiert ist.

14. Bauteil (1) nach Anspruch 13,
wobei die Erweichungstemperatur (T_{g,5}) der Innenfolie (5) niedriger als die Erweichungstemperatur (T_{g,6}) der Deckfolie (6) ist.

## Claims

1. Process for the production of a component (1) made of a fibre composite material, where
- a foil composite (7) with a thermoplastic outer foil (6) and with a thermoplastic inner foil (5) is produced, where the modulus of elasticity (E) of the inner foil (5) within a temperature range is smaller than the modulus of elasticity (E) of the outer foil (6),
- the inner foil (5) of the foil composite (7) is bonded to a molding (4) comprising a fiber material (2) and comprising a thermoset (3),
- the molding (4) is hardened, and
- the foil composite (7) is subjected to a heat treatment in the temperature range within which the modulus of elasticity (E) of the inner foil (5) is smaller than the modulus of elasticity (E) of the outer foil (6), where the outer foil (6) undergoes stress relaxation.

2. Process according to Claim 1,
where the foil composite (7) is produced with a thermoplastic outer foil (6) and with a thermoplastic inner foil (5), where the softening point (T_{g,5}) of the inner foil (5) is lower than the softening point (T_{g,6}) of the outer foil (6), and where the foil composite (7) is subjected to a heat treatment at a temperature between the two softening points (T_{g,5}, T_{g,6}), where the inner foil (5) undergoes stress relaxation due to softening.

3. Process according to Claim 1 or 2,
where the moulding (7) is subjected to a forming process before the heat treatment for the stress relaxation of the outer foil (5).

4. Process according to any of Claims 1 to 3,
where the foil composite (7) is bonded to the moulding (4) by laying the inner foil (5) of the foil composite (7) on a dry fibre material (2) and using a heat treatment to soften the inner foil (5), where material of the softened inner foil (5) penetrates into the fibre material (2), and then the thermoset (3) is introduced in the form of liquid with saturation of the fibre material (2).

5. Process according to any of Claims 1 to 3,
where the foil composite (7) is bonded to the moulding (4) by laying the inner foil (5) of the foil composite (7) on a dry fibre material (2), then the thermoset (3) is introduced in the form of liquid with saturation of the fibre material (2), and then a heat treatment is used to soften the inner foil (5), where material of the softened inner foil (5) penetrates into the fibre material (2) and/or forms an adhesive boundary region with the thermoset (3).

6. Process according to Claim 4 or 5,
where the thermoset (3) is introduced by means of a pressure difference.

7. Process according to any of Claims 4 to 6,
where the introduction of the thermoset (3), the forming process and the hardening take place in an RTM process in combination at approximately the same time in a compression step.

8. Process according to any of the preceding claims,
where the foil composite (7) is produced by coextrusion of the outer foil (6) and the inner foil (5).

9. Process according to any of the preceding claims,
where fibre material (2) used comprises a laid fibre scrim, a woven fibre fabric, a knitted fibre fabric, a fibre paper, and/or a nonwoven fibre fabric.

10. Process according to any of the preceding claims,
where fibres used comprise glass fibres, carbon fibres, natural fibres, thermoplastic synthetic fibres, and/or aramid fibres.

11. Process according to any of the preceding claims,
where outer foil (6) used comprises a plastic selected from the group consisting of PMMA, PC, SAN, ASA, ABS, PVF, and PVC, or a combination thereof.

12. Process according to any of the preceding claims,
where inner foil (5) used comprises a plastic selected from the group consisting of ABS, EVA, PCB, APAO, TPE-U, TPE-E, TPE-A, EVOH, and PE, or a combination thereof.

13. Component (1) made of a fibre composite material, in particular produced by one of the processes according to any of the preceding claims, comprising a fibre material (2) bonded in a matrix made of a thermoset (3), and also comprising a surface layer made of a foil composite (2) with a thermoplastic outer foil (6) and with a thermoplastic inner foil (5), where the modulus of elasticity (E) of the inner foil (5) within a temperature range is smaller than the modulus of elasticity (E) of the outer foil (6), where the inner foil (5) has been bonded directly to the thermoset (3) and/or to the fibre material (2), and where the outer foil (6) has undergone stress relaxation.

14. Component (1) according to Claim 13,
where the softening point (T_{g,5}) of the inner foil (5) is lower than the softening point (T_{g,6}) of the outer foil (6).

## Revendications

1. Procédé de fabrication d'un composant (1) en un matériau composite à base de fibres, dans lequel
- on fabrique un composite de feuilles (7), comportant une feuille de couverture thermoplastique (6) et une feuille intérieure thermoplastique (5), le module d'élasticité (E) de la feuille intérieure (5) étant, à l'intérieur d'une plage de températures, inférieur au module d'élasticité (E) de la feuille de couverture (6),
- on lie le composite de feuilles (7), comportant la feuille intérieure (5), à une ébauche (4) comprenant un matériau fibreux (2) et un thermoplastique (3),
- on durcit l'ébauche (4), et
- on soumet le composite de feuilles (7) à un traitement thermique sur la plage de températures à l'intérieur de laquelle le module d'élasticité (E) de la feuille intérieure (5) est inférieur au module d'élasticité (E) de la feuille de couverture (6), la feuille de couverture (6) étant relaxée en contrainte.

2. Procédé selon la revendication 1, dans lequel on fabrique le composite de feuilles (7) comportant une feuille de couverture thermoplastique (6) et une feuille intérieure thermoplastique (5), la température de ramollissement (T_{g,5}) de la feuille intérieure (5) étant inférieure à la température de ramollissement (T_{g,6}) de la feuille de couverture (6), et le composite de feuilles (7) étant soumis à un traitement thermique à une température comprise entre les deux températures de ramollissement (T_{g,5}, T_{g,6}), la feuille intérieure (5) étant par ramollissement relaxée en tension.

3. Procédé selon la revendication 1 ou 2, dans lequel l'ébauche (7) est, avant le traitement thermique, formée pour la relaxation en contrainte de la feuille de couverture (5).

4. Procédé selon l'une des revendications 1 à 3, dans lequel le composite de feuilles (7) est lié à l'ébauche (4) par application du composite de feuilles (7), comportant la feuille intérieure (5), sur un matériau fibreux sec (2), et la feuille intérieure (5) étant ramollie par un traitement thermique, le matériau de la feuille intérieure ramollie (5) pénétrant dans le matériau fibreux (2), le thermoplastique (3) étant ensuite introduit sous forme liquide avec imprégnation du matériau fibreux (2).

5. Procédé selon l'une des revendications 1 à 3, dans lequel le composite de feuilles (7) est lié à l'ébauche (4), par application du composite de feuilles (7), comportant la feuille intérieure (5), sur un matériau fibreux sec (2), le thermoplastique (3) étant ensuite introduit sous forme liquide avec imprégnation du matériau fibreux (2), puis la feuille intérieure (5) étant ramollie par un traitement thermique, le matériau de la feuille intérieure ramollie (5) pénétrant dans le matériau fibreux (2) et/ou formant avec le thermoplastique (3) une zone limite adhésive.

6. Procédé selon la revendication 4 ou 5, dans lequel le thermoplastique (3) est introduit à l'aide d'une différence de pression.

7. Procédé selon l'une des revendications 4 à 6, dans lequel l'introduction du thermoplastique (3), le formage et le durcissement sont réalisés selon un procédé RTM, d'une manière combinée, dans un bref laps de temps, dans une étape d'estampage.

8. Procédé selon l'une des revendications précédentes, dans lequel le composite de feuilles (7) est fabriqué par une co-extrusion de la feuille de couverture (6) et de la feuille intérieure (5).

9. Procédé selon l'une des revendications précédentes, dans lequel on utilise en tant que matériau fibreux (2) une grille de fibres, un tissu de fibres, un tissu maillé de fibres, un papier de fibres, un article de bonneterie de fibres et/ou un non-tissé de fibres.

10. Procédé selon l'une des revendications précédentes, dans lequel on utilise en tant que fibres des fibres de verre, des fibres de carbone, des fibres naturelles, des fibres plastiques thermoplastiques et/ou des fibres aramides.

11. Procédé selon l'une des revendications précédentes, dans lequel on utilise en tant que feuille de couverture (6) un matériau plastique choisi dans le groupe qui contient le PMMA, le PC, le SAN, l'ASA, l'ABS, le PVF et le PVC, ou une combinaison de ceux-ci.

12. Procédé selon l'une des revendications précédentes, dans lequel on utilise en tant que feuille plastique (5) un matériau plastique choisi dans le groupe qui contient l'ABS, l'EVA, le PCB, l'APAO, le TPE-U, le TPE-E, le TPE-A, l'EVOH et le PE.

13. Composant (1) en un matériau composite à base de fibres, en particulier fabriqué par l'un des procédés selon l'une des revendications précédentes, comprenant un matériau fibreux (2), inséré dans une matrice en un thermoplastique (3), ainsi qu'une couche superficielle constituée d'un composite de feuilles (2) comportant une feuille de couverture thermoplastique (6) et une feuille intérieure thermoplastique (5), le module d'élasticité (E) de la feuille intérieure (5) étant dans une plage de températures inférieur au module d'élasticité (E) de la feuille de couverture (6), la feuille intérieure (5) étant directement liée au thermoplastique (3) et/ou au matériau fibreux (2), et la feuille de couverture (6) étant relaxée en contrainte.

14. Composant (1) selon la revendication 13, dans lequel la température de ramollissement (T_{g,5}) de la feuille intérieure (5) est inférieure à la température de ramollissement (T_{g,6}) de la feuille de couverture (6).
